# EUROPÄISCHE PATENTSCHRIFT

(11) **EP 1 188 694 B1**
(45) Veröffentlichungstag und Bekanntmachung des Hinweises auf die Patenterteilung: **15.09.2004**
(21) Anmeldenummer: 01109656.7
(22) Anmeldetag: 19.04.2001
(51) Int. Cl.: B65G 23/44

(54) **Spanneinrichtung für ein endloses Fördermittel an einem Transfersystem**
Tensioning device for an endless conveyor in a transfer system
Dispositif pour tensioner un convoyeur continu dans un système de transfert

(30) Priorität: 15.09.2000 DE 10045740
(43) Veröffentlichungstag der Anmeldung: 20.03.2002
(73) Patentinhaber: ROBERT BOSCH GMBH, 70442 Stuttgart (DE)
(72) Erfinder: Leisner, Ernst, 71638 Ludwigsburg (DE); Schneider, Ralph, 71336 Waiblingen (DE); Scholpp, Claus, 71706 Markgroeningen (DE)

(56) Entgegenhaltungen:
- EP-A- 0 655 215
- DE-A- 3 631 117
- DE-A- 19 616 458
- DE-U- 9 201 040
- FR-A- 1 397 469

## Beschreibung

### Stand der Technik

Die Erfindung betrifft eine Spanneinrichtung für ein endloses Fördermittel an einem Transfersystem nach dem Oberbegriff des Anspruchs 1, wie sie allgemein bekannt ist. Die Fördermittel von Transfersystemen, beispielsweise Ketten, die im Laufe der Zeit eine Längung/Dehnung erfahren, benötigen einen Bereich, in dem sie gespannt werden. Dies erfolgt üblicherweise in sogenannten Kettenkästen mittels jeweils eines Spanners, der im Bereich unterhalb der Antriebsgehäuse für die Fördermittel angeordnet ist. Dabei wird das Fördermittel um ein Gleitstück oder ein Ritzel umgelenkt. Das Gleitstück beziehungsweise das Ritzel ist dabei an dem Spanner befestigt, der das Fördermittel senkrecht nach unten vom Antriebsgehäuse weg spannt oder aber das Fördermittel so umlenkt, daß es unterhalb des Antriebsgehäuses beziehungsweise auch unterhalb der Antriebsstrecke des Transfersystems parallel zu dessen Laufrichtung gespannt wird. Dies hat zur Folge, daß die bekannten Lösungen entweder viel Bauraum in der Höhe erfordern, oder daß sie bis unterhalb der Antriebsstrecke des Transfersystems reichen, das heißt sehr lang bauen. Um eine möglichst flexible Antriebsstrecke realisieren zu können, muß sowohl die Bauhöhe als auch die Baulänge einer Spanneinrichtung minimiert werden. Gleichzeitig soll ein möglichst großer Spannweg realisiert werden, um eine möglichst große Längung des Fördermittels aufnehmen bzw. ausgleichen zu können.

Aus der FR 1 397 469 A ist eine Spanneinrichtung für ein endloses Fördermittel an einem Transfersystem mit einem Umlenkelement bekannt, die unterhalb eines Gehäuses der Antriebseinheit angeordnet ist. Das in einem Führungselement schwenkbar gelagerte Umlenkelement, welches das Fördermittel aus Richtung der Antriebseinheit in Richtung der Rücklaufebene des Transfersystems umlenkt, ist zum Ausgleich der Längung des Fördermittels durch ein Spannelement entgegengesetzt zur Antriebseinheit kraftbelastet. Bei einer Bewegung des Fördermittels in Richtung der Antriebseinheit kann sich die Spannung des Fördermittels verändern.

Bei den bekannten Spanneinrichtungen, die im Reversierbetrieb eingesetzt werden, wird in der Regel der Kettenspanner festgesetzt, wodurch ein häufiges oder gar ständiges Kontrollieren der Spannung der Förderkette verbunden mit einem manuellen Nachspannen erforderlich ist. Derartige bekannte Lösungen bieten somit nicht die Möglichkeit, eine Kette im Reversierbetrieb automatisch nachzuspannen. Um dies zu umgehen, müßten entsprechend groß dimensionierte Spannfedern verwendet werden. Diese würden jedoch die Kette ständig belasten, wodurch der Verschleiß steigen könnte.

Die Aufgabe der Erfindung besteht darin, eine Spanneinrichtung für ein endloses Fördermittel an einem Transfersystem zu schaffen, die die Spannung des Fördermittels auch dann aufrechterhält, wenn die Bewegung des Fördermittels am Umlenkelement in Richtung der Antriebseinheit erfolgt.

Erfindungsgemäß wird die Aufgabe dadurch gelöst, daß eine Einrichtung vorgesehen ist, die das Umlenkelement beim Umlenken des Fördermittels aus Richtung der Rücklaufebene in Richtung der Antriebseinheit gegen eine Bewegung in Richtung der Antriebseinheit sperrt.

### Vorteile der Erfindung

Die erfindungsgemäße Spanneinrichtung für ein endloses Fördermittel an einem Transfersystem mit den kennzeichnenden Merkmalen des Anspruchs 1 hat den Vorteil, daß sie das Umlenkelement beim Umlenken des Fördermittels aus Richtung der Rücklaufebene des Transfersystems in Richtung der Antriebseinheit gegen eine Bewegung in Richtung der Antriebseinheit sperrt, wodurch die Spannfedern entlastet und die Spannung der Förderkette gehalten werden.

Auf ein manuelles Entsperren kann verzichtet werden, wenn die Einrichtung das Umlenkelement beim Umlenken des Fördermittels aus Richtung der Antriebseinheit in Richtung der Rücklaufebene für ein Spannen durch das Spannelement wieder freigibt.

Weitere vorteilhafte Weiterbildungen der erfindungsgemäßen Spanneinrichtung für ein endloses Fördermittel an einem Transfersystem sind in den Unteransprüchen angegeben.

So liegt ein Vorteil darin, daß die Spannrolle von den Schenkeln der Gabel seitlich aufgenommen wird, so daß sich im Bewegungsweg der Spannrolle keine Führungsmittel befinden, die den Spannweg begrenzen. Dadurch lässt sich nahezu der gesamte Bauraum der Spanneinrichtung als Spannweg für die Förderkette nutzen.

Besonders vorteilhaft ist es, die Gabel an einer Trägereinheit zu befestigen, die wiederum am Antriebsgehäuse der Antriebseinheit befestigt werden kann. Dadurch kann die Spanneinrichtung als vormontierbare Einheit ausgebildet werden. In Verbindung mit einem die Trägereinheit und die Spannrolle umschließenden Gehäuse ergibt sich darüber hinaus der besondere Vorteil, daß nach Abnahme des Gehäuses vom Antriebsgehäuse der Antriebseinheit die Spanneinrichtung von allen Seiten frei zugänglich ist. Als besonders vorteilhaft hat sich auch erwiesen, ein ortsfestes Gleitstück zu verwenden, dessen mit der Förderkette in Berührung stehende Kontaktfläche eine Krümmung aufweist, die dem kreisförmigen Bewegungsweg der Spannrolle angepaßt ist. Dadurch wird die Förderkette auf dem Gleitstück entlang eines Kreisbogens von der Spannrolle in die Rücklaufebene der Transferebene zurückverbracht, wodurch der Spannweg für die Förderkette maximiert wird. Durch die Ausbildung einer mit einem Sperrelement zusammenwirkenden Bohrung an der Gabel läßt sich die Spanneinrichtung zur Montage bzw. Demontage der Förderkette festsetzen. Anschlaglaschen an der Trägereinheit sorgen weiterhin auf einfache Weise für einen definierten Schwenkbereich der Spannrolle.

### Zeichnung

Ein Ausführungsbeispiel der Erfindung ist in der Zeichnung dargestellt und wird nachfolgend näher erläutert. Es zeigen:
Figur 1 eine erfindungsgemäße Spanneinrichtung in einer perspektivischen Ansicht und
Figur 2 die Spanneinrichtung nach Figur 1 im montierten Zustand am Ende eines Transfersystems bei einem teilweise abgenommenen Gehäuse der Spanneinrichtung und ohne Förderkette,
Figur 3 eine Spanneinrichtung mit einer Sperreinrichtung,
Figur 4 eine Ansicht auf eine Klinke und eine Schiene gemäß der Ansicht IV in Figur 3 und
Figur 5 eine Darstellung des Wirkprinzips der Sperreinrichtung aus Figur 3.

### Beschreibung des Ausführungsbeispiels

Die in den Figuren dargestellte Spanneinrichtung 10 ist Bestandteil eines Transfersystems 1, welches beispielsweise dem Transport von Werkstückträgern oder Werkstücken zwischen nicht dargestellten Bearbeitungsstationen dient. Dazu weist das Transfersystem 1 ein endloses Fördermittel, beispielsweise eine Förderkette 6 auf, die entlang einer Strecke 2 in einer Förderebene und einer Rücklaufebene umläuft. Am einen Ende der Strecke 2 ist in einem Antriebsgehäuse 3 ein Antriebsrad 4 für die Förderkette 6 angeordnet, welches über eine Welle antreibbar ist. Anstatt der Welle kann ein Antriebsmotor auch direkt mit dem Antriebsrad 4 gekoppelt sein. Ein soweit beschriebenes Transfersystem 1 ist allgemein bekannt und wird daher im weiteren nicht näher erläutert.

Die Spanneinrichtung 10 hat im Ausführungsbeispiel ein verzahntes Spannrad 11, um das die Förderkette 6 nach dem Austritt aus dem Antriebsgehäuse 3 umgelenkt wird, um die Förderkette 6 wieder in Richtung der Rücklaufebene der Strecke 2 zu führen. Das Spannrad 11 ist mittels einer Achse 12 in einer Gabel 13 gelagert, welche zwei Schenkel 14, 15 und ein die Schenkel 14, 15 miteinander verbindendes Querstück 16 hat. Die beiden freien Enden der Schenkel 14, 15 sind mittels einer Achse 17 in einer aus Blech bestehenden Trägereinheit 20 gelagert. Das Spannrad 11 ist somit um die Achse 17 entlang eines Kreisbogenabschnitts schwenkbar, wobei der Abstand zwischen den beiden Achsen 12 und 17 den Radius des Kreisbogenabschnitts bestimmt.

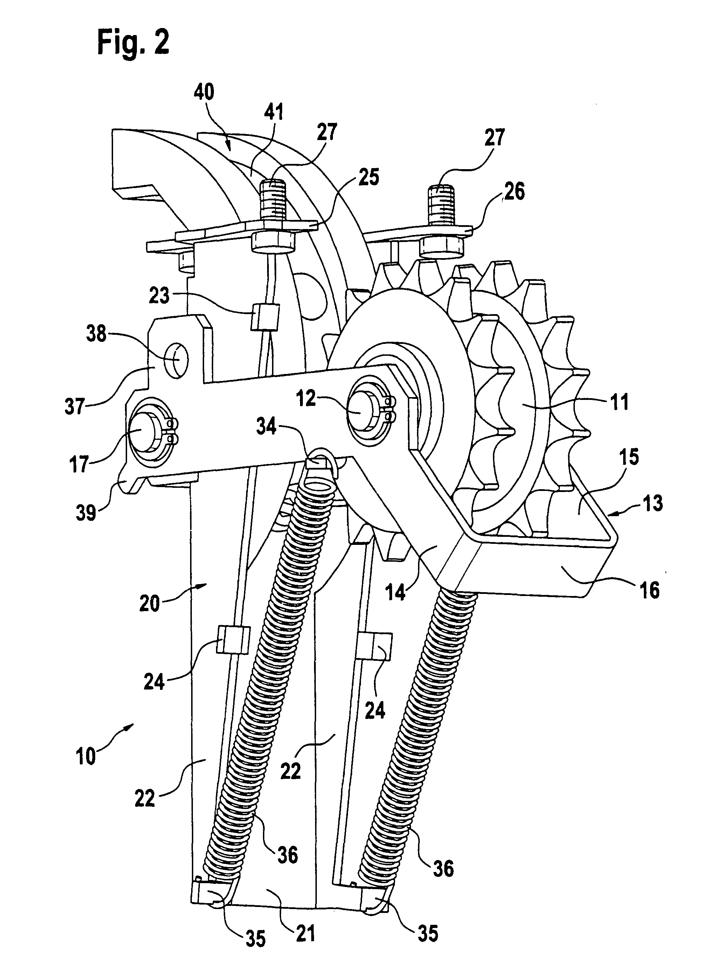

Die Trägereinheit 20 hat einen rechteckigen Grundabschnitt 21, von dem zwei dreiecksförmige Abschnitte 22 rechtwinklig abgebogen sind, so daß sich im Querschnitt eine U-förmige Form ergibt. Von den beiden Abschnitten 22 ist jeweils eine obere und eine untere Anschlaglasche 23, 24 abgebogen, die den Schwenkbereich der an den Außenseiten der Abschnitte 22 vorbeigeführten Schenkel 14, 15 begrenzt. Wesentlich ist auch, daß die Position der oberen Anschlaglaschen 23 derart ist, daß das Spannrad 11 in der oberen Endlage der Gabel 13 bis in die Öffnung 7 des Antriebsgehäuses 3, aus der die Förderkette 6 austritt, eintauchen kann. Weiterhin sind an dem einen Ende der Abschnitte 22 Befestigungslaschen 25, 26 mit Bohrungen rechtwinklig abgebogen, mit deren Hilfe die Spanneinrichtung 10 an ihrer Trägereinheit 20 als vormontierte Baugruppe an der Unterseite des Antriebsgehäuses 3 mittels Befestigungsschrauben 27 anschraubbar ist (Figur 2). Im montierten Zustand der Spanneinrichtung 10 ragt der Grundabschnitt 21 senkrecht vom Antriebsgehäuse 3 nach unten weg, das heißt, daß die Spanneinrichtung 10 das Antriebsgehäuse 3 in Richtung der Strecke 2 nicht überragt bzw. nicht in die Strecke 2 hineinragt.

Während des Betriebs des Transfersystems 1 ist die Spanneinrichtung 10 aus Sicherheitsgründen von einem Gehäuse 30 umgeben, das in dem in der Figur 2 dargestellten Beispiel aus zwei gleichen Gehäusehalbschalen 31 besteht, die miteinander verrastbar sind, und die ebenfalls am Anschlaggehäuse 3 befestigbar sind. In der Figur 2 ist zur Verdeutlichung der Spanneinrichtung 10 eine Gehäusehalbschale 31 entfernt, so daß ersichtlich ist, daß die Spanneinrichtung 10 mit Ausnahme im Bereich einer Öffnung 32 und der dem Antriebsgehäuse 3 zugewandten Oberseite des Gehäuses 30 vollständig vom Gehäuse 30 umschlossen ist.

An den Schenkeln 14, 15 sind nahe der Achse 12 erste Haltelaschen 34 und an den den Befestigungslaschen 25, 26 gegenüberliegenden Enden der Abschnitte 22 zweite Haltelaschen 35 ausgebildet, die als Aufhängung für je eine Zugfeder 36 dienen, die das Spannrad 11 in Richtung und gegen die unteren Anschlaglaschen 24 ziehen. Weiterhin ist nahe der Achse 17 in Fortsätzen 37 der Schenkel 14, 15 je eine Bohrung 38 ausgebildet, so daß die Bohrungen 38 in einer Position, in denen sich die Schenkel 14, 15 nahe den oberen Anschlaglaschen 23 befinden, hinter dem Grundabschnitt 21 der Trägereinheit 20 sind, das heißt, von den Abschnitten 22 unverdeckt sind. In dieser Lage ist zur Montage der Förderkette 6 ein nicht dargestelltes Sperrelement durch wenigstens eine der Bohrungen 38 führbar, so daß das Spannrad 11 trotz der Federkraft der Zugfedern 36 nahe seiner oberen Endlage fixiert ist, indem das Sperrelement gegen den Grundabschnitt 21 der Trägereinheit 20 anliegt.

Nahe der Achse 17 ist jeweils ein weiterer Fortsatz 39 an den Schenkeln 14, 15 ausgebildet, der im Betrieb durch die Öffnung 32 des Gehäuses 30 ragt und als Indikator für die Stellung des Spannrads 11, das heißt für die Längung der Förderkette 6 dient.

Zuletzt ist zwischen den Abschnitten 22 der Trägereinheit 20 ein mit der Trägereinheit 20 verbundenes, beispielsweise aus verschleißfestem Kunststoff bestehendes Gleitstück 40 angeordnet. Dieses Gleitstück 40 hat eine konvex geformte Kontaktfläche 41 für die Förderkette 6, deren Krümmung dem Abstand der beiden Achsen 12 und 17 voneinander angepaßt ist, derart, dass die Kontaktfläche 41 und der auf einem Kreisbogenabschnitt verlaufende Schwenkweg des Spannrads 11 zueinander in etwa parallel verlaufen, das heißt, daß das Spannrad 11 die Kontaktfläche 41 nicht berührt. Das Gleitstück 40 dient dazu, die Förderkette 6 vom Spannrad 11 wieder in die Rücklaufebene der Strecke 2 zurückzuführen.

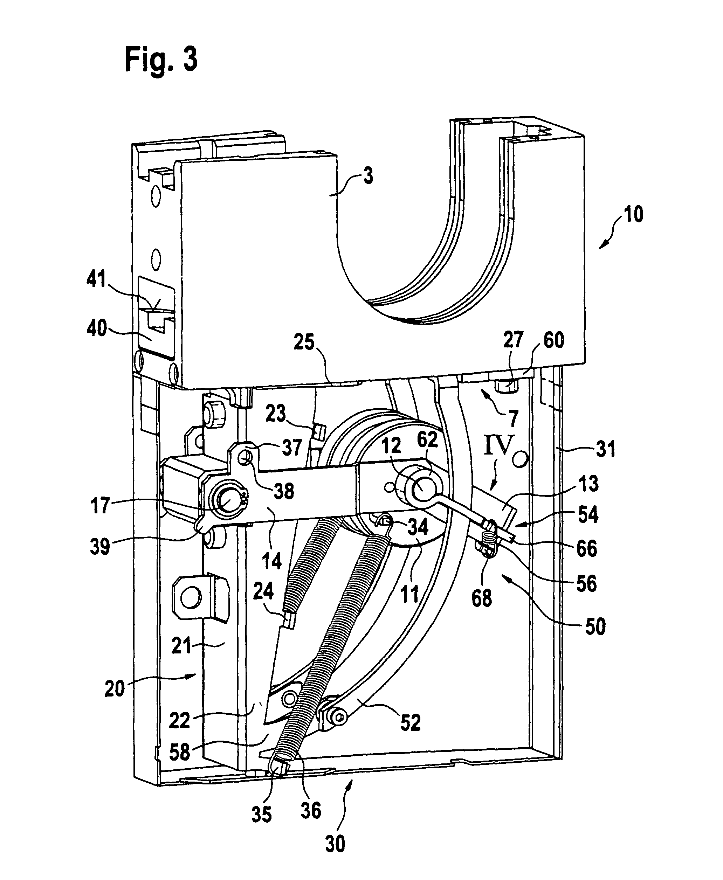

In der Figur 3 ist eine Spanneinrichtung 10 gezeigt, an der eine Einrichtung 50 vorgesehen ist, die das Spannrad 11 beim Umlenken der Förderkette 6 aus Richtung der Rücklaufebene in Richtung der Antriebseinheit gegen eine Bewegung in Richtung der Antriebseinheit sperrt. Vorzugsweise gibt die Einrichtung 50 das Spannrad 11 beim Umlenken der Förderkette 6 aus Richtung der Antriebseinheit in Richtung der Rücklaufebene für ein Spannen durch die - in der Figur 3 unterbrochen dargestellte - Zugfeder 36 frei. Mit der Einrichtung 50 ist somit ein Reversierbetrieb der Förderkette 6 bzw. ein Betrieb in zwei entgegengesetzte Transportrichtungen möglich, bei dem die Förderkette 6 gespannt werden kann bzw. die Spannung gehalten wird.

Die Einrichtung 50 besteht im wesentlichen aus zwei bogenförmigen Schienen 52, zwei Klinken 54 und zwei Zugfedern 56. Es ist jedoch auch möglich, daß die Einrichtung 50 statt der doppelten Ausführung der Schienen 52, Klinken 54 und Zugfedern 56 nur jeweils eine Schiene 52, eine Klinke 54 und eine Zugfeder 56 aufweist.

Die Schienen 52 haben vorzugsweise eine rechteckige Querschnittsfläche und sind entlang des Bewegungswegs des Spannrads 11, idealerweise konzentrisch zum Bewegungsweg, angeordnet. Die Schienen 52 haben im vorliegenden Ausführungsbeispiel einen größeren Abstand zur Achse 17 als die Achse 12 des Spannrads 11. Die Schenkel 14, 15 sind dabei zwischen den beiden Schienen 52 angeordnet. Die Schienen 52 sind am einen Ende mit abstehenden Flanschen 58 des Abschnitts 22 am andern Ende über Flansche 60 mit dem Gehäuse 3 verschraubt, wobei auch andere Möglichkeiten der Befestigungen denkbar sind. Die Schienen 52 haben einen inneren Radius, der in der Längsachse der Achse 17 seinen Mittelpunkt hat.

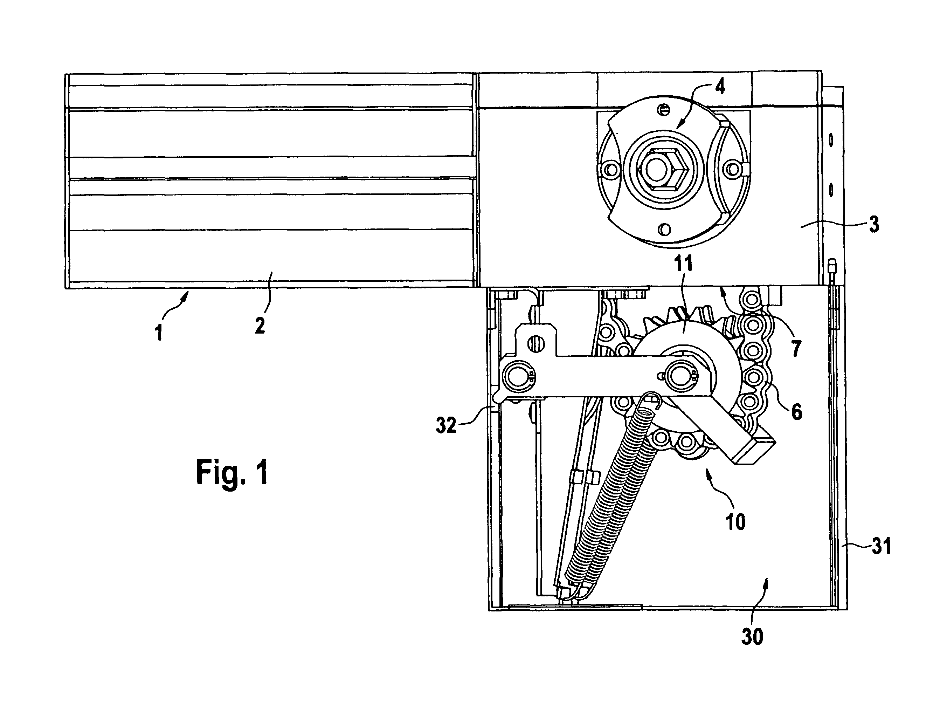

Die Schienen 52 wirken jeweils mit einer Klinke 54 zusammen, die an den Schenkeln 14, 15 schwenkbar gelagert sind. Die Klinken 54 sind, vorzugsweise um die Achse 12 des Spannrads 11, schwenkbar gelagert, wofür die Achse 12 länger ausgebildet ist, als in den Figuren 1 und 2. Ein Ende der Klinke 54 ist als Aufnahme 62 bzw. Auge für die Achse 17 ausgebildet. Da die Klinke 54 im vorliegenden Ausführungsbeispiel ein gestanztes und gebogenes Blechteil ist, kann es relativ einfach hergestellt werden. Es ist auch möglich, die Klinke 54 an einer anderen Stelle der Schenkel 14, 15 zu lagern. Es ist jedoch einfacher, diese Lagerung an der Achse 17 vorzusehen.

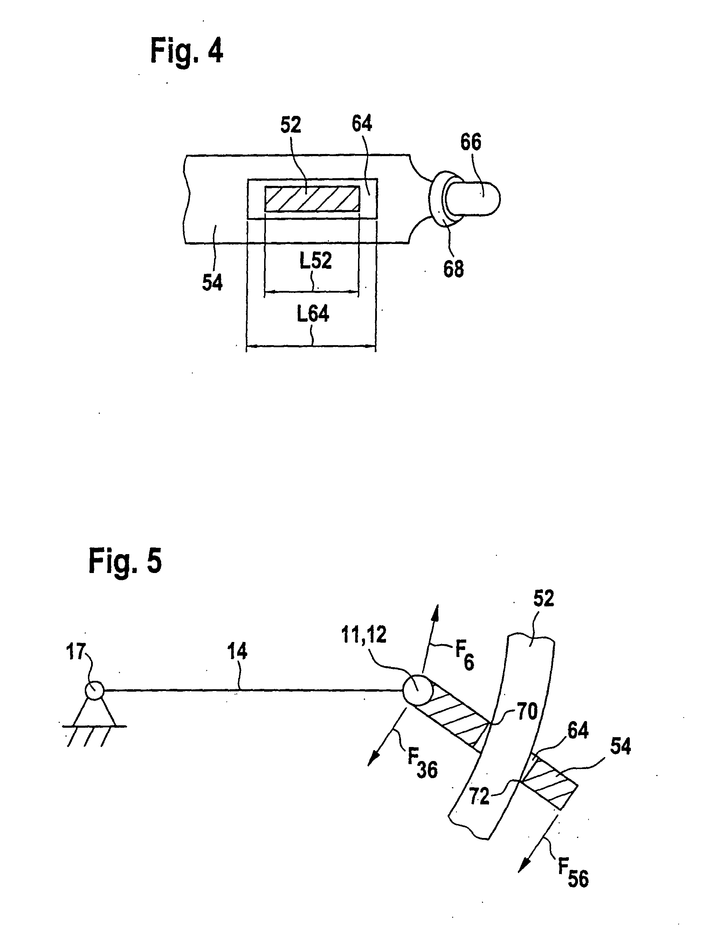

Wie aus der Figur 4 hervorgeht, schließt sich an die Aufnahme 62 ein Abschnitt mit einem rechteckigen Durchbruch 64 bzw. einer rechteckige Ausklinkung an. In diesem Durchbruch 64 ist die Schiene 52 angeordnet. Der Durchbruch 64 kann auch eine andere, der Schiene 52 angepasste Querschnittsform haben. Die Länge l₆₄ des Durchbruchs 64 in der Ebene des Bewegungswegs des Schenkels 14, 15 ist jedoch größer als die entsprechende Länge l₅₂ der Querschnittsfläche der Schiene 52.

An den Durchbruch 64 schließt sich eine Lasche 66 oder eine sonstige Befestigungseinrichtung für die Zugfeder 56 an. In der Figur 3 ist gezeigt, dass die Zugfeder 56 mit ihrem anderen Ende an einer Lasche 68 oder einer sonstigen Befestigungseinrichtung befestigt ist, die am Schenkel 14, 15, vorzugsweise im Bereich des Querstücks 16, angeordnet ist. Somit ist die Klinke 54 mit einem Spannelement entgegengesetzt zur Antriebseinheit kraftbelastet.

In der Figur 5 sind für die Wirkungsweise der Einrichtung 50 ausschlaggebende Kräfte freigemacht bzw. freigeschnitten dargestellt. Im ersten Fall wird die Förderkette 6 aus Richtung der Rücklaufebene in Richtung der Antriebseinheit umgelenkt. Dabei greift die Federkraft F₃₆ der Zugfeder 36 an der Achse 12 der Umlenkrolle 11 an und wirkt entgegengesetzt zur Antriebseinheit. Die quasi-statische Zugkraft F₆ der Förderkette 6 greift ebenfalls an der Achse 12 der Umlenkrolle 11 an, aber wirkt in Richtung der Antriebseinheit. Hierbei würde ohne die Einrichtung 50 die gesamte Zugkraft F₆ der Förderkette 6 auf die Zugfedern 36 wirken. Durch die Federkraft F₅₆ der Zugfeder 56 entsteht jedoch ein Kippmoment um die Achse 12, da die Federkraft F₅₆ von der Antriebseinheit weg wirkt. Zwar reicht die Gewichtskraft der Klinke 54 auch aus, um ein Kippmoment zu erzeugen. Durch die Zugfeder 56 wird dies jedoch in einer sichereren Weise erreicht.

Die Kante 70 des Durchbruchs 64, die der Achse 12 und der Antriebseinheit jeweils am nächsten liegt, und die Kante 72 des Durchbruchs, die von der Achse 12 und der Antriebseinheit jeweils am weitesten entfernt ist, werden durch das Kippmoment an die Schiene 52 gedrückt und bleiben über Haftreibung in ihrer Lage. Je größer die Kraft F₆ ist, desto stärker werden die Kanten 70, 72 an die Schiene gepreßt. Dadurch werden die Klinke 54 bzw. der Durchbruch 64 und die Schiene 52 verkantet. Die Einrichtung 50 sperrt somit das Spannrad 11 gegen eine Bewegung in Richtung der Antriebseinheit.

Im zweiten Fall wird die Förderkette 6 aus Richtung der Antriebseinheit in Richtung der Rücklaufebene transportiert. Die Förderkette 6 wird im Gegensatz zum ersten Fall nicht mehr von der Antriebseinheit um das Spannrad 11 nach oben gezogen, die dargestellte Zugkraft F₆ der Förderkette 6 geht sehr stark zurück und wird kleiner als die Federkraft F₃₆. Da die Federkraft F₃₆ auch größer als die Federkraft F₅₆ ist, werden die Kanten 70, 72 nicht mehr so stark an die Schiene 52 gedrückt bzw. können sich sogar lösen. Das Spannrad 11 kann sich wieder von der Antriebseinheit weg bewegen, und die Förderkette 6 wird wieder gespannt. Die Einrichtung 50 gibt somit das Spannrad 11 beim Umlenken der Förderkette 6 aus Richtung der Antriebseinheit in Richtung der Rücklaufebene für ein Spannen wieder frei.

Zu den geschilderten Möglichkeiten des automatischen Sperrens und Freigebens gibt es mehrere Alternativen. Zum Beispiel kann über eine Verzahnung an der Schiene 52 die Klinke 54 verrastet werden. Dadurch können unter Umständen höhere Zugkräfte mit der Förderkette 6 übertragen werden, da nicht mehr Linienberührung, sondern Flächenberührung zwischen der Klinke 54 und der Schiene 52 möglich ist. Allerdings erfordert dies ggf. einen Heben, um die Sperre wieder freizugeben, was einen manuellen Eingriff darstellt. Außerdem ist hierbei keine stufenlose Verstellung möglich, wie dies bei der Schiene 52 mit der gezeigten relativ glatten Oberfläche der Fall ist.

Statt über die Klinke 54, die mit der Schiene 52 zusammenwirkt, können für das Sperren auch elektromagnetisch betätigte Bremsbacken gegen die Schiene 54 gedrückt werden. Dadurch wären eventuell schnellere Reaktionszeiten möglich. Dies stellt jedoch auch einen zusätzlichen baulichen Aufwand dar. Weiterhin müssen eine Verkabelung und eine Steuerung vorgesehen werden.

Gegenüber den genannten Alternativen stellt die Einrichtung 50 die einfachste Lösung dar. Die Förderkette 6 wird auf einfache Weise in der einen Bewegungsrichtung gespannt und in der anderen Bewegungsrichtung gespannt gehalten.

## Patentansprüche

1. Spanneinrichtung (10) für ein endloses Fördermittel (6) an einem Transfersystem (1), mit einem unterhalb eines Gehäuses (3) einer Antriebseinheit für das Fördermittel (6) angeordneten Umlenkelement (11), das das Fördermittel (6) aus Richtung der Antriebseinheit in Richtung der Rücklaufebene des Transfersystems (1) umlenkt, wobei das Umlenkelement (11) zum Ausgleich der Längung des Fördermittels (6) mittels wenigstens eines Spannelements (36) entgegengesetzt zur Antriebseinheit kraftbelastet ist, wobei das Umlenkelement (11) in wenigstens einem Führungselement (14, 15) gelagert ist, das entlang des Bewegungswegs des Umlenkelements (11) seitlich am Umlenkelement (11) angeordnet ist, so daß der Bewegungsweg des Umlenkelements (11) führungselementefrei ist, wobei das Führungselement wenigstens ein in einer Achse (17) gelagerter Hebel (14, 15) ist, so daß das Führungselement um die Achse (17) schwenkbar ist,
**dadurch gekennzeichnet, daß** eine Einrichtung (50) vorgesehen ist, die das Umlenkelement (11) beim Umlenken des Fördermittels (6) aus Richtung der Rücklaufebene in Richtung der Antriebseinheit gegen eine Bewegung in Richtung der Antriebseinheit sperrt.

2. Spanneinrichtung (10) nach Anspruch 1, **dadurch gekennzeichnet, daß** die Einrichtung (50) das Umlenkelement (11) beim Umlenken des Fördermittels (6) aus Richtung der Antriebseinheit in Richtung der Rücklaufebene für ein Spannen durch das Spannelement freigibt.

3. Spanneinrichtung (10) nach Anspruch 1 oder 2, **dadurch gekennzeichnet, daß** entlang des Bewegungswegs des Umlenkelements (11) wenigstens eine bogenförmige Schiene (52) vorgesehen ist, die mit einer Klinke (54) zusammenwirkt, die am Führungselement (14, 15), vorzugsweise um eine Achse (12) des Umlenkelements (11), schwenkbar gelagert ist.

4. Spanneinrichtung (10) nach Anspruch 3, **dadurch gekennzeichnet, daß** die Klinke (54) mit einem Spannelement (56) entgegengesetzt zur Antriebseinheit kraftbelastet ist.

5. Spanneinrichtung (10) nach einem der Ansprüche 1 bis 4, **dadurch gekennzeichnet, daß** die Klinke einen Durchbruch (64) aufweist, dessen Länge (I₆₄) in der Ebene des Bewegungswegs des Hebels (14, 15) größer ist als die entsprechende Länge (I₅₂) der Querschnittsfläche der Schiene (52).

6. Spanneinrichtung (10) nach einem der Ansprüche 3 bis 5, **dadurch gekennzeichnet, daß** auf zwei Seiten des Führungselements (14, 15) jeweils eine bogenförmige Schiene (52) und eine Klinke (54) vorgesehen sind.

7. Spanneinrichtung (10) nach Anspruch 3, **dadurch gekennzeichnet, daß** das Führungselement zwei Hebel (14, 15) aufweist, die mit einem Querstück (16) eine Gabel (13) ausbilden.

8. Spanneinrichtung (10) nach einem der Ansprüche 1 bis 7, **dadurch gekennzeichnet, daß** das Führungselement an einem Träger (20) befestigt ist, der mit der Antriebseinheit verbindbar ist und daß ein Gehäuse (30) das Umlenkelement (11) und den Träger (20) umschließt, wobei das Gehäuse (30) ebenfalls an der Antriebseinheit befestigbar ist.

9. Spanneinrichtung (10) nach Anspruch 1, **dadurch gekennzeichnet, daß** das Spannelement wenigstens eine Zugfeder (36) ist, die zwischen dem Umlenkelement (11) und dem von der Antriebseinheit wegweisenden Ende des Trägers (20) angeordnet ist.

10. Spanneinrichtung (10) nach einem der vorhergehenden Ansprüche, **dadurch gekennzeichnet, daß** das Umlenkelement (11) in seiner dem Antriebsgehäuse (3) zugewandten, oberen Endlage in den Bereich des Antriebsgehäuses (3) bzw. in die Antriebseinheit hineinreicht.

11. Spanneinrichtung (10) nach einem der Ansprüche 8 bis 10, **dadurch gekennzeichnet, daß** ein ortsfestes Gleitstück (40) zum Rückführen des Fördermittels (6) vom Umlenkelement (11) in die Rücklaufebene des Transfersystems (1) am Träger (20) befestigt ist.

12. Spanneinrichtung (10) nach Anspruch 11, **dadurch gekennzeichnet, daß** das Gleitstück (40) auf der dem Fördermittel (6) zugewandten Seite eine gekrümmte Oberfläche (41) aufweist und daß die Krümmung des Gleitstücks (40) und der Bewegungsweg des Umlenkelements (11) in etwa parallel zueinander verlaufen und unsbesondere sich nicht überschneiden.

13. Spanneinrichtung (10) nach einem der Ansprüche 1 bis 12, **dadurch gekennzeichnet, daß** das Umlenkelement wenigstens ein eine Verzahnung aufweisendes Spannrad (11) und das Fördermittel eine mit dem Spannrad (11) zusammenwirkende Förderkette (6) ist.

14. Spanneinrichtung (10) nach Anspruch 7, **dadurch gekennzeichnet, daß** an wenigstens einem Hebel (14, 15) eine Bohrung (38) zum Fixieren des Hebels (14, 15) mittels eines Sperrelements ausgebildet ist.

15. Spanneinrichtung (10) nach Anspruch 8, **dadurch gekennzeichnet, daß** am Träger (20) Anschlagmittel (23, 24) zur Begrenzung des Schwenkweges für wenigstens einen Hebel (14, 15) ausgebildet sind.

## Claims

1. Tensioning arrangement (10) for an endless conveying means (6) in a transfer system (1), having a deflecting element (11) which is arranged beneath a housing (3) of a drive unit for the conveying means (6) and deflects the conveying means (6) from the direction of the drive unit in the direction of the return plane of the transfer system (1), it being the case that, in order to compensate for the elongation of the conveying means (6), the deflecting element (11) is forced counter to the drive unit by means of at least one tensioning element (36), that the deflecting element (11) is mounted in at least one guide element (14, 15) which is arranged laterally on the deflecting element (11), along the movement path of the deflecting element (11), with the result that the movement path of the deflecting element (11) is free of guide elements, and that the guide element is at least one lever (14, 15) mounted in a spindle (17), with the result that the guide element can be pivoted about the spindle (17), **characterized by** the provision of an arrangement (50) which blocks the deflecting element (11) against movement in the direction of the drive unit when the conveying means (6) is deflected from the direction of the return plane in the direction of the drive unit.

2. Tensioning arrangement (10) according to Claim 1, **characterized in that** the arrangement (50) frees the deflecting element (11) for tensioning by the tensioning element when the conveying means (6) is deflected from the direction of the drive unit in the direction of the return plane.

3. Tensioning arrangement (10) according to Claim 1 or 2, **characterized by** the provision, along the movement path of the deflecting element (11), of at least one arcuate rail (52) which interacts with a catch (54) which is mounted in a pivotable manner on the guide element (14, 15), preferably about a spindle (12) of the deflecting element (11).

4. Tensioning arrangement (10) according to Claim 3, **characterized in that** the catch (54) is forced counter to the drive unit by a tensioning element (56).

5. Tensioning arrangement (10) according to one of Claims 1 to 4, **characterized in that** the catch has a through-passage (64), of which the length (l₆₄) in the plane of the movement path of the lever (14, 15) is greater than the corresponding length (l₅₂) of the cross-sectional surface of the rail (52).

6. Tensioning arrangement (10) according to one of Claims 3 to 5, **characterized in that** in each case one arcuate rail (52) and one catch (54) are provided on two sides of the guide element (14, 15).

7. Tensioning arrangement (10) according to Claim 3, **characterized in that** the guide element has two levers (14, 15) which, with a crosspiece (16), form a fork (13).

8. Tensioning arrangement (10) according to one of Claims 1 to 7, **characterized in that** the guide element is fastened on a carrier (20) which can be connected to the drive unit, and **in that** a housing (30) encloses the deflecting element (11) and the carrier (20), it likewise being possible for the housing (30) to be fastened on the drive unit.

9. Tensioning arrangement (10) according to Claim 1, **characterized in that** the tensioning element is at least one tension spring (36) which is arranged between the deflecting element (11) and that end of the carrier (20) which is oriented away from the drive unit.

10. Tensioning arrangement (10) according to one of the preceding claims, **characterized in that** in its top end position, in which it is directed towards the drive housing (3), the deflecting element (11) reaches into the region of the drive housing (3) and/or into the drive unit.

11. Tensioning arrangement (10) according to one of Claims 8 to 10, **characterized in that** a stationary sliding component (40) for guiding the conveying means (6) back from the deflecting element (11) into the return plane of the transfer system (1) is fastened on the carrier (20).

12. Tensioning arrangement (10) according to Claim 11, **characterized in that** the sliding component (40) has a curved surface (41) on the side which is directed towards the conveying means (6), and **in that** the curvature of the sliding component (40) and the movement path of the deflecting element (11) run approximately parallel to one another and, in particular, do not intersect one another.

13. Tensioning arrangement (10) according to one of Claims 1 to 12, **characterized in that** the deflecting element is at least one tensioning wheel (11) with a toothing formation, and the conveying means is a conveying chain (6) which interacts with the tensioning wheel (11).

14. Tensioning arrangement (10) according to Claim 7, **characterized in that** a bore (38) for fixing the lever (14, 15) by means of a blocking element is formed on at least one lever (14, 15).

15. Tensioning arrangement (10) according to Claim 8, **characterized in that** stopping means (23, 24) for limiting the pivoting path for at least one lever (14, 15) are formed on the carrier (20).

## Revendications

1. Dispositif tendeur (10) pour un convoyeur sans fin (6) dans un système de transfert (1), comprenant un élément de renvoi (11) disposé sous un carter (3) d'une unité d'entraînement pour le convoyeur (6), qui dévie le convoyeur (6) de la direction de l'unité d'entraînement en direction du plan de retour du système de transfert (1), l'élément de renvoi (11) étant sollicité par force à l'encontre de l'unité d'entraînement pour compenser l'allongement du convoyeur (6) au moyen d'au moins un élément tendeur (36), l'élément de renvoi (11) étant logé dans au moins un élément de guidage (14, 15) disposé le long de la course de l'élément de renvoi (11), latéralement à l'élément de renvoi (11), de telle sorte que la course de l'élément de renvoi (11) est libre d'élément de guidage, l'élément de guidage étant au moins un levier (14, 15) logé dans un axe (17), de telle sorte que l'élément de guidage est pivotant autour de l'axe (17),
**caractérisé en ce qu'**
un dispositif (50) est prévu pour bloquer l'élément de renvoi (11) contre un mouvement en direction de l'unité d'entraînement, lors de la déviation du convoyeur (6) hors de la direction du plan de retour en direction de l'unité d'entraînement.

2. Dispositif tendeur (10) selon la revendication 1,
**caractérisé en ce que**
lors de la déviation du convoyeur (6) hors de la direction de l'unité d'entraînement en direction du plan de retour, le dispositif (50) libère l'élément de renvoi (11) pour une tension par l'élément tendeur.

3. Dispositif tendeur (10) selon la revendication 1 ou 2,
**caractérisé en ce que**
le long de la course de l'élément de renvoi (11) au moins un rail (52) en forme d'arc est prévu, pour coopérer avec un cliquet (54) logé en pivotement sur l'élément de guidage (14, 15), de préférence autour d'un axe (12) de l'élément de renvoi (11).

4. Dispositif tendeur (10) selon la revendication 3,
**caractérisé en ce que**
le cliquet (54) est sollicité par force avec un élément tendeur (56) à l'encontre de l'unité d'entraînement.

5. Dispositif tendeur (10) selon l'une quelconque des revendications 1 à 4,
**caractérisé en ce que**
le cliquet présente un passage (64) dont la longueur (l₆₄) dans le plan de la course du levier (14, 15) est supérieure à la longueur (l₅₂) correspondante du plan de section transversale du rail (52).

6. Dispositif tendeur (10) selon l'une quelconque des revendications 3 à 5,
**caractérisé en ce que**
sur deux faces de l'élément de guidage (14, 15) respectivement un rail en forme d'arc (52) et un cliquet (54) sont prévus.

7. Dispositif tendeur (10) selon la revendication 3,
**caractérisé en ce que**
l'élément de guidage présente deux leviers (14, 15) qui conjointement avec un élément transversal (16) forment une fourche (13).

8. Dispositif tendeur (10) selon l'une quelconque des revendications 1 à 7,
**caractérisé en ce que**
l'élément de guidage est fixé à un support (20) pouvant être relié à l'unité d'entraînement, et un carter (30) entoure l'élément de renvoi (11) et le support (20), le carter (30) pouvant également être fixé à l'unité d'entraînement.

9. Dispositif tendeur (10) selon la revendication 1,
**caractérisé en ce que**
l'élément tendeur est au moins un ressort de traction (36) disposé entre l'élément de renvoi (11) et l'extrémité du support (20) s'éloignant de l'unité d'entraînement.

10. Dispositif tendeur (10) selon l'une quelconque des revendications précédentes,
**caractérisé en ce que**
l'élément de renvoi (11), dans sa position finale supérieure en regard du carter d'entraînement (3), s'étend jusque dans la zone du carter d'entraînement (3) ou dans l'unité d'entraînement.

11. Dispositif tendeur (10) selon l'une quelconque des revendications 8 à 10,
**caractérisé en ce qu'**
un patin (40) fixe est fixé au support (20) pour faire retourner le convoyeur (6) depuis l'élément de renvoi (11) dans le plan de retour du système de transfert (1).

12. Dispositif tendeur (10) selon la revendication 11,
**caractérisé en ce que**
le patin (40), côté en regard du convoyeur (6), présente une surface courbe (41), et la courbure du patin (40) et la course de l'élément de renvoi (11) s'étendent sensiblement en parallèle l'une par rapport à l'autre et notamment ne se croisent pas.

13. Dispositif tendeur (10) selon l'une quelconque des revendications 1 à 12,
**caractérisé en ce que**
l'élément de renvoi est au moins une roue tendeuse (11) présentant une denture et le convoyeur une chaîne de transport (6) coopére avec la roue tendeuse (11).

14. Dispositif tendeur (10) selon la revendication 7,
**caractérisé en ce que**
dans au moins un levier (14, 15) un alésage (38) est prévu pour fixer le levier (14, 15) au moyen d'un élément de blocage.

15. Dispositif tendeur (10) selon la revendication 8,
**caractérisé en ce que** des moyens de butée (23, 24) sont prévus sur le support (20) pour limiter le pivotement pour au moins un levier (14, 15).
